# DEMANDE DE BREVET EUROPEEN

(11) **EP 1 341 078 A1**
(43) Date de publication de la demande: **03.09.2003**
(21) Numéro de dépôt: 03290330.4
(22) Date de dépôt: 11.02.2003
(51) Int. Cl.: G06F 3/14, G09G 5/14, G09G 5/377, G06F 17/30, G01N 21/956

(54) **Procédé de transmission de données d'images entre un serveur et un terminal**

(30) Priorité: 27.02.2002 FR 0202472
(71) Demandeur: FRANCE TELECOM, 75015 Paris (FR)
(72) Inventeur: Teyssier, Henri, 38330 Saint-Nazaire-les-Eymes (FR); Prola, Alain, 38100 Grenoble (FR); Brun, Alain, 38450 Le Gua, Vif (FR); Tran Xuan, Fabrice, 38320 Eybens (FR)
(74) Mandataire: Hassine, Albert

(57) **Abrégé**

L'invention concerne une transmission de données d'images entre un serveur et un terminal (1) comprenant un écran d'affichage (ECR) commandé par une interface graphique (13) et une mémoire (12) dans laquelle sont mémorisées des données acquises d'une image courante pour afficher cette image courante. Selon l'invention, on transmet du serveur (SER) au terminal (1), sur demande d'un utilisateur du terminal, des données d'au moins une image modèle et une application logicielle de contrôle de la mémoire (12), pour réserver :
- une première partie (MEM1) de la mémoire aux données d'image courante acquises, et
- une seconde partie (MEM2) de la mémoire aux données d'image modèle transmises,
et afficher simultanément, pour comparaison, l'image courante et l'image modèle sur l'écran du terminal (ECR).

## Description

L'invention concerne une transmission de données d'images entre un serveur et un terminal.

En communication radio-cellulaire, la technologie des terminaux mobiles, notamment des téléphones mobiles ou des assistants personnels de type PDA (pour *"Personal Digital Assistant"),* en plein essor, permet de mettre en oeuvre des applications de plus en plus sophistiquées sur les terminaux. C'est ainsi que l'on prévoit maintenant d'équiper des terminaux de moyens d'acquisition de données d'image, en vue d'afficher une image courante, ou même une séquence animée, sur un écran du terminal. On entend par *"moyens d'acquisition du terminal"* aussi bien :
- une entrée numérique pour recevoir les données d'image, obtenues initialement dans ce cas par un appareil photographique, une caméra ou tout appareil séparé,
- ou encore un objectif de prise de vue, monté sur le terminal même, pour obtenir directement les données d'image courante.

Un tel terminal comprend une mémoire dans laquelle sont mémorisées les données acquises d'une image courante, ou d'une séquence animée courante. Le terminal comprend en outre une interface graphique capable de coopérer avec cette mémoire pour commander l'affichage de l'image courante sur l'écran du terminal.

Avec de tels terminaux, on peut concevoir un service nouveau offrant à un utilisateur la possibilité de comparer l'image courante à une image modèle dont les données sont transmises d'un serveur au terminal, sur demande de l'utilisateur. Ainsi, l'utilisateur peut acquérir, par ses propres moyens, une image courante fixe, telle qu'une photographie d'une pièce mécanique usinée, et la comparer avec une image modèle téléchargée, telle que la photographie d'une pièce mécanique de référence, correspondante. L'utilisateur peut aussi acquérir une séquence animée courante, notamment d'un geste sportif (saut en hauteur ou swing de golf), et la comparer avec une séquence animée modèle, téléchargée, représentant par exemple un geste optimal, d'un sportif professionnel.

Cependant, un tel nouveau service rencontre la difficulté de représenter simultanément l'image courante et l'image modèle (ou la séquence animée courante et la séquence animée modèle) sur l'écran du terminal, en vue de leur comparaison. Cette difficulté est accrue si l'on tient compte des différences de capacité des terminaux (mémoire, processeur) et des problèmes de compatibilité avec les logiciels résidents dont sont équipés les terminaux.

La présente invention vient améliorer la situation.

Elle propose à cet effet un procédé de transmission de données d'images entre un serveur et un terminal. Le terminal comprend un écran d'affichage commandé par une interface graphique et une mémoire dans laquelle sont mémorisées des données acquises d'au moins une image courante. La mémoire précitée est apte à coopérer avec l'interface graphique en vue d'un affichage de l'image courante sur l'écran du terminal.

Selon l'invention, on transmet du serveur au terminal, sur demande d'un utilisateur du terminal :
- des données d'au moins une image modèle,
- ainsi qu'une application logicielle de contrôle de la mémoire précitée, pour réserver :
   . une première partie de la mémoire aux données d'image courante acquises, et
   . une seconde partie de la mémoire aux données d'image modèle transmises,
   en vue d'un affichage simultané de l'image courante et de l'image modèle sur l'écran du terminal.

Avantageusement, ces données d'imagé modèle sont des données d'image tridimensionnelle, ce qui permet d'afficher, sur l'écran du terminal, l'image modèle suivant un angle de vue qui correspond sensiblement à l'angle de prise de vue pour acquérir les données d'image courante.

Dans une réalisation avantageuse, on transmet, du serveur au terminal, une pluralité d'images modèles successives sous forme d'une séquence animée modèle, en vue d'un affichage simultané, pour comparaison, de cette séquence modèle et d'une séquence animée courante, acquise.

Ainsi, le signal radiofréquence transmis par le serveur et destiné au terminal mobile, comprenant des données d'image modèle ainsi que des données d'application logicielle de contrôle de la mémoire du terminal, constitue un moyen important pour mettre en oeuvre l'invention. A ce titre, la présente invention vise aussi un tel signal.

D'autres caractéristiques et avantages de l'invention apparaîtront à l'examen de la description détaillée ci-après, et des dessins annexés sur lesquels :
- la figure 1 représente schématiquement les composants d'un terminal, en interaction avec un serveur distant ;
- la figure 2 représente schématiquement les étapes d'un procédé de communication entre un terminal et un serveur, pour la transmission de données d'image, au sens de la présente invention ;
- la figure 2A représente, dans un premier mode de réalisation selon lequel l'image courante et l'image modèle sont juxtaposées sur l'écran ECR du terminal, les étapes d'un procédé d'attribution de fenêtres de l'écran, respectives, pour ces deux images ;
- la figure 2B représente, dans un second mode de réalisation selon lequel l'image courante et l'image modèle sont superposées sur l'écran ECR du terminal, un procédé pour appliquer des attributs d'image différents, respectifs, à ces deux images ;
- la figure 3 illustre l'image courante IM1 précitée et l'image modèle IM2 précitée, juxtaposées sur un écran ECR du terminal ;
- la figure 3A représente une superposition des images IM1 et IM2 sur l'écran ECR, ces images représentant des gestes sportifs homologues (saut en hauteur dans l'exemple illustré) ;
- la figure 3B représente une superposition des images IM1 et IM2 sur l'écran ECR, ces images représentant une pièce mécanique usinée dans l'exemple illustré) ;
- la figure 4 représente les différentes étapes que doit mettre en ouvre un utilisateur du terminal pour ajuster l'angle de vue de l'image modèle IM2, pour que cet angle de vue corresponde sensiblement à un angle de prise de vue pour acquérir l'image courante IM1 ;
- la figure 5A illustre schématiquement les étapes d'un procédé de traitement, au niveau du serveur, de l'image acquise IM1, pour sélectionner un angle de vue de l'image modèle IM2 correspondant sensiblement à l'angle de prise de vue pour acquérir l'image IM1, suivant un premier mode de réalisation ;
- la figure 5B représente schématiquement les étapes d'un procédé de traitement de l'image acquise IM1, au niveau du terminal, pour déterminer un angle de prise de vue de l'image acquise et sélectionner, dans l'image modèle, un angle de vue correspondant sensiblement à cet angle de prise de vue de l'image acquise, suivant un second mode de réalisation ; et
- la figure 5C illustre un procédé pour ajuster les positions relatives des images courante IM1 et modèle IM2, superposées sur l'écran du terminal.

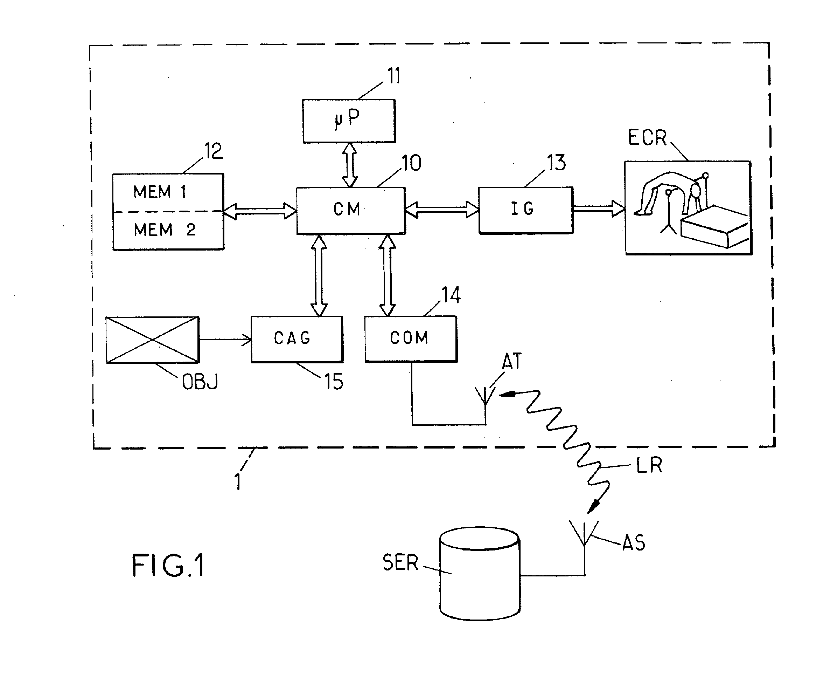

On se réfère tout d'abord à la figure 1 sur laquelle un terminal mobile 1 (de type assistant personnel PDA, pour *"Personal Digital Assistant",* ou combiné téléphonique portable) portant la référence 1, comporte un écran ECR, par exemple un écran à cristaux liquides (LCD) ou autre, piloté par une interface graphique 13. Le terminal 1 comprend une carte mère 10 capable de coopérer avec un ensemble de composants que comprend le terminal 1, tel qu'un microprocesseur 11, l'interface graphique précitée 13, une mémoire vive 12 de type RAM, une mémoire morte de type ROM (non représentée), ainsi que des interfaces de sortie telles qu'une interface de communication 14 et une carte d'acquisition graphique 15.

Dans l'exemple décrit, le terminal 1 comprend des moyens de prise de vue OBJ pour acquérir des données d'image courante. Par exemple, ces moyens de prise de vue OBJ peuvent comporter un objectif relié à des capteurs CCD qui délivrent un signal de données d'image numérique conventionnelles. Ces moyens de prise de vue OBJ sont reliés à la carte d'acquisition graphique 15 qui coopère avec la carte mère 10 pour mémoriser les données d'image acquises dans la mémoire vive 12. Dans une variante du mode de réalisation présenté, le terminal 1 reçoit des données d'image acquises par un dispositif d'acquisition d'images séparé (tel qu'une caméra vidéo-numérique ou un appareil photographique numérique), par l'intermédiaire d'une interface de communication appropriée (par exemple une entrée *"digital video").*

Le terminal 1 comprend en outre une antenne AT, capable de communiquer par une liaison radiofréquence (flèche LR) avec un serveur SER, par l'intermédiaire d'une antenne AS reliée au serveur. L'antenne AT du terminal est reliée à une interface de communication 14 du terminal 1, laquelle peut coopérer avec d'autres composants du terminal 1, par l'intermédiaire de la carte mère 10, comme décrit ci-avant.

Ainsi, le terminal 1 peut acquérir des données d'image courante par les moyens de prise de vue OBJ et mémoriser les données d'image acquises dans la mémoire vive 12. Par ailleurs, selon un procédé de transmission qui sera décrit ci-après, le terminal 1 peut recevoir du serveur des données d'image modèle, par son interface de communication 14, et mémoriser ces données d'image modèle dans la mémoire vive 12. L'interface graphique 13 peut coopérer ensuite avec la mémoire vive 12, par l'intermédiaire de la carte mère 10, pour mettre en forme les signaux vidéo, à partir des données d'image mémorisées dans la mémoire vive 12, en vue d'un affichage de ces images courante et/ou modèle sur l'écran du terminal ECR.

Dans l'exemple représenté sur la figure 1, le terminal 1 comprend des composants séparés, tels qu'une mémoire vive, une carte mère, un microprocesseur, ou autre. Dans une variante, ces composants peuvent être réunis au sein d'une même puce, suivant la technique d'intégration qui est utilisée pour le terminal 1. Ainsi, on comprendra que la mémoire vive 12 peut, par exemple, consister en une mémoire dédiée à l'interface graphique et faire partie d'un même composant que l'interface graphique 13, pour la mémorisation des données d'images, ces images devant être affichées sur l'écran ECR du terminal.

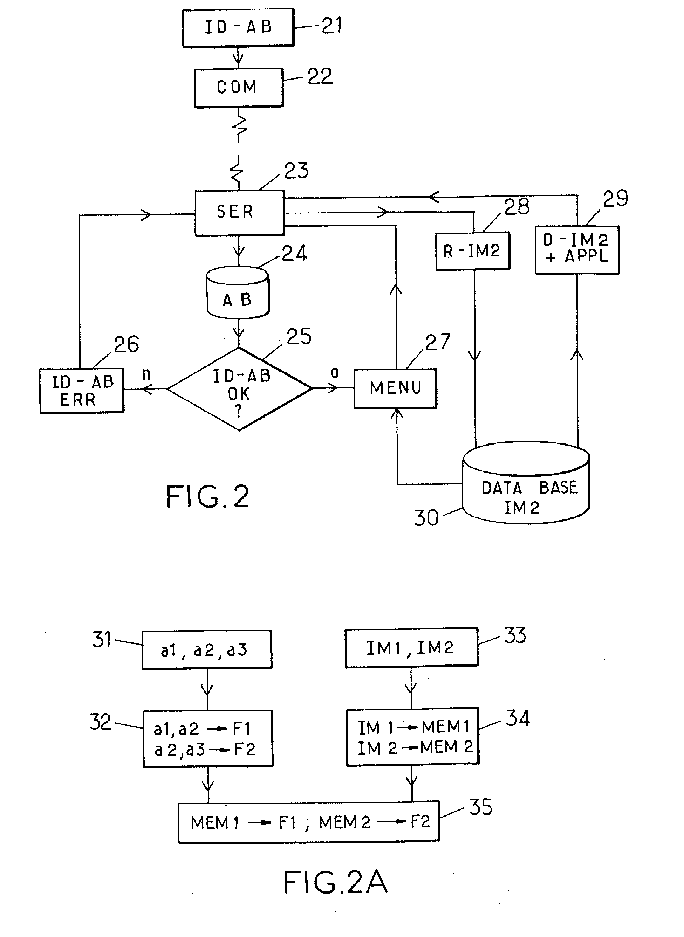

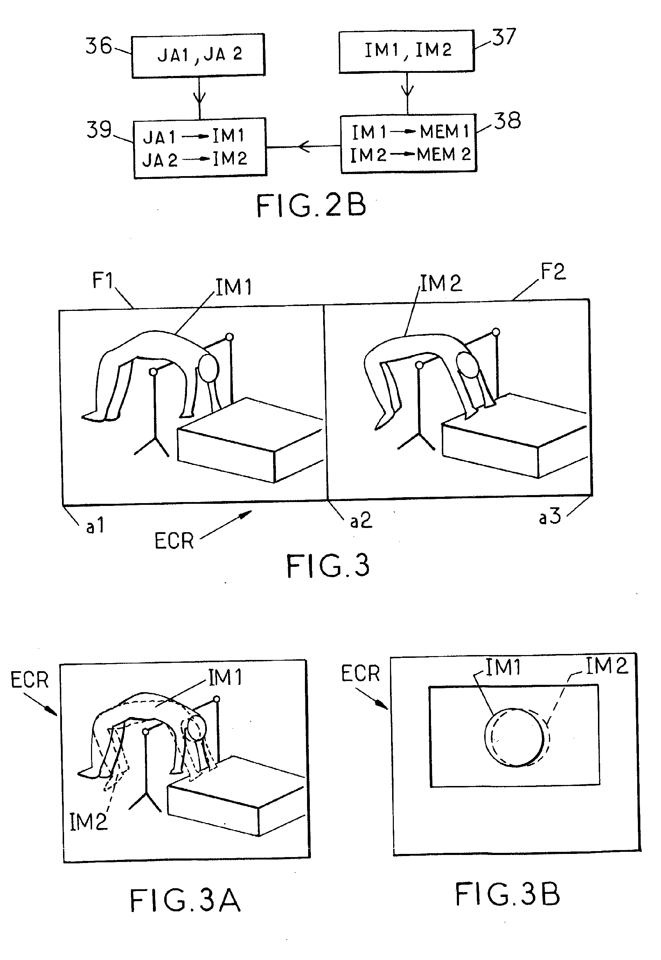

On se réfère maintenant à la figure 2 pour décrire un procédé de transmission de données d'images modèle, sur demande d'un utilisateur du terminal, au sens de la présente invention. Au préalable, l'utilisateur du terminal a mis en ouvre les moyens de prise de vue OBJ du terminal pour filmer, par exemple, une séquence animée d'un geste sportif, tel qu'un saut en hauteur (image qui apparaît sur l'écran ECR de la figure 1). Sur commande de l'utilisateur du terminal 1, une communication est établie entre le terminal 1 et le serveur SER. Le terminal 1 met en forme un signal radiofréquence comportant un identifiant d'abonné ID_AB, à l'étape 21. Le signal radiofréquence est envoyé, à l'étape 22, par l'intermédiaire de l'interface de communication 14. Le serveur reçoit, à l'étape 23, ce signal et l'interprète, à l'aide d'une base de données d'abonnés de terminaux 24, pour savoir si l'utilisateur du terminal est reconnu comme abonné et a droit, ou non, au service de comparaison d'images proposé par le serveur. Si l'utilisateur du terminal n'est pas identifié comme étant un abonné (étape 25), un message d'erreur (étape 26) retourne au serveur, lequel communique un défaut d'identification de l'utilisateur du terminal. En revanche, si l'utilisateur du terminal est reconnu comme un abonné identifié, un signal de menu est mis en forme par le serveur et est envoyé, par liaison radiofréquence, au terminal 1 (étape 27). Ainsi, après identification de l'utilisateur du terminal en tant qu'abonné, cet utilisateur accède, par son terminal 1, à un menu de type portail, dont les rubriques s'affichent sur l'écran ECR de son terminal. En principe, les rubriques auxquelles l'utilisateur a accès sont conditionnées par son identifiant d'abonné ID_AB et elles s'affichent toutes sur l'écran de son terminal. En variante, si l'utilisateur ne dispose d'un droit d'accès que pour une partie seulement de ces rubriques, un message d'erreur lui sera retourné en cas de sélection de rubrique non autorisée.

Par exemple, le menu peut proposer différentes rubriques principales, dont une rubrique relative à un thème *"geste sportif".* Une sous-rubrique peut désigner le thème *"athlétisme".* Une sous-rubrique, dans un second niveau, est relative au thème *"saut en hauteur".* Par l'intermédiaire d'un clavier (non représenté) auquel l'utilisateur a accès sur son terminal, il choisit le thème *"saut en hauteur".* Le terminal 1 met en forme un signal radiofréquence comportant un identifiant de requête d'image modèle R_IM2. Ce signal est reçu par le serveur (étape 28) et est interprété pour chercher l'image requise dans une banque de données d'images 30. En retour, un signal radiofréquence comprenant les données d'image modèle D_{_}IM2, qui ont été requises par l'utilisateur du terminal et mises en forme par le serveur, est renvoyé au terminal 1 (étape 29). Au sens de la présente invention, ce signal radiofréquence comprend en outre des données d'application logicielle APPL, cette application logicielle étant destinée à être mémorisée par le terminal 1, pour afficher les deux images courante IM1 et modèle IM2 sur l'écran ECR du terminal, simultanément.

Avantageusement, le menu des rubriques proposées et obtenues à l'étape 27 est actualisé en fonction du contenu de la base de données des images modèle 30.

En se référant à nouveau à la figure 1, l'interface de communication 14 reçoit l'application logicielle pour contrôler la mémoire vive 12. Les données numériques de l'application logicielle peuvent être mémorisées dans une mémoire morte (non représentée), ou encore dans la mémoire vive 12. Le processeur 11 met en oeuvre les instructions de l'application logicielle pour réserver une première partie MEM1 de la mémoire vive 12 aux données d'image acquises et relatives à l'image courante obtenue directement par l'utilisateur, ainsi qu'une seconde partie MEM2 de la mémoire vive 12 aux données d'image modèle obtenues par téléchargement à partir du serveur.

Dans un premier mode de réalisation représenté sur la figure 3, on affiche simultanément l'image courante acquise IM1 et l'image modèle téléchargée IM2 sur deux parties distinctes de l'écran ECR. Ainsi, la mise en oeuvre de l'application logicielle téléchargée commence par une partition de l'écran ECR, avec une définition d'abscisses limite de points de l'écran a1, a2 et a3. Ainsi, les points de l'écran dont les abscisses sont comprises entre a1 et a2 sont réservés à l'affichage de l'image courante acquise IM1. Les points de l'écran dont les abscisses sont comprises entre a2 et a3 sont réservés à l'affichage de l'image modèle téléchargée IM2.

En se référant à la figure 2A représentant les étapes d'un procédé selon lequel on prévoit une partition de l'écran d'affichage ECR du terminal, la mise en oeuvre de l'application logicielle téléchargée commence par une déclaration (étape 31) des abscisses de l'écran a1, a2 et a3. A partir des valeurs de ces abscisses, on définit , à l'étape 32, des fenêtres F1 et F2 dans l'écran d'affichage ECR (voir figure 3). Parallèlement ou à la suite de ces étapes 31 et 32, lorsque les données d'image acquises IM1 et téléchargées IM2 ont été obtenues à l'étape 33, le contenu de la mémoire vive 12 est réorganisé pour réserver une première partie MEM1 de la mémoire 12 aux données de l'image courante IM1 et une seconde partie MEM2 de la mémoire 12 aux données téléchargées de l'image modèle IM2 (étape 34). L'interface graphique 13 interprète le contenu de la mémoire 12 pour afficher le contenu de la première partie MEM1 dans la fenêtre F1 et le contenu de la seconde partie MEM2 dans la fenêtre F2 (étape 35).

En se référant à la figure 3, on obtient sur l'écran du terminal ECR :
- une image courante IM1 obtenue directement par l'utilisateur, dans une première fenêtre F1 (partie gauche de l'écran ECR, tel que représenté sur la figure 3) ;
- une image modèle IM2 obtenue par téléchargement à partir du serveur, dans une seconde fenêtre F2, distincte de la fenêtre F1 (à droite de l'écran ECR, tel que représenté sur la figure 3).

En se référant à la figure 3, l'image dans la fenêtre F1 est directement acquise par l'utilisateur et représente, dans son objet, un saut en hauteur, par exemple de l'utilisateur lui-même. L'image dans la fenêtre F2 représente, dans son objet, un saut en hauteur réalisé par un professionnel et mémorisé dans la base de données 30 (figure 2). Ainsi, l'objet dont l'image est acquise par l'utilisateur et l'objet dont l'image est téléchargée à partir du serveur sont homologues et l'utilisateur peut comparer les deux images affichées dans les fenêtres distinctes F1 et F2.

Bien entendu, en variante du mode de réalisation représenté sur la figure 3, il peut être prévu deux fenêtres F1 et F2 successives dans le sens de la longueur de l'écran ECR. Ainsi, la mise en oeuvre de l'application logicielle téléchargée commence par une déclaration de trois ordonnées pour définir les fenêtres distinctes F1 et F2 dans cette variante.

Dans un second mode de réalisation plus sophistiqué, on prévoit une superposition des images courante IM1 et modèle IM2, sur l'écran d'affichage ECR, pour permettre à l'utilisateur de mieux apprécier les différences entre les deux images IM1 et IM2. Dans un mode de réalisation avantageux, on prévoit des attributs de représentation d'image qui sont différents entre l'image IM1 et l'image IM2. Ainsi, sur le figure 3A, les contours de l'image IM2 sont représentés en traits pointillés. En variante, il peut être prévu de représenter le contenu défini par les contours de l'image IM2 par des parties grisées de l'écran, tandis que l'image courante IM1 conserve ses contrastes d'origine.

Toutefois, pour comparer convenablement les deux images IM1 et IM2, superposées dans ce second mode de réalisation, une mise à l'échelle, une sélection d'un angle de vue adéquat dans l'image IM2, ainsi qu'un ajustement des positions relatives des images IM1 et IM2 sont préférentiellement effectuées au préalable, en vue de superposer parfaitement les deux images. La figure 3B illustre, à titre d'exemple, l'image IM1 d'une pièce mécanique usinée (comportant un alésage central dans l'exemple représenté), cette image ayant été acquise directement par l'utilisateur. L'image acquise IM1 est à comparer avec une image modèle IM2, téléchargée à partir du serveur. L'utilisateur peut remarquer, sur l'écran ECR, une différence de cote de l'alésage central de l'image modèle IM2 (représentée en traits pointillés) par rapport à l'alésage central de l'image acquise IM1 (représentée en trait plein). L'utilisateur peut alors apprécier la précision de la pièce mécanique qu'il a, le cas échéant, lui-même usinée, par rapport à une pièce mécanique référencée dans la base de données 30 du serveur.

En se référant à la figure 2B, dans ce second mode de réalisation, la mise en oeuvre de l'application logicielle commence par une déclaration (étape 36) d'un jeu d'attributs JA1 destiné à l'image IM1 et d'un jeu d'attributs JA2 destiné à l'image IM2. Parallèlement, ou à la suite de cette déclaration, la mémoire vive 12 reçoit les données d'images IM1 et IM2 (étape 37). Le contenu de la mémoire 12 est réorganisé de sorte qu'une première partie MEM1 comporte les données d'image IM1 et une seconde partie MEM2 comporte les données d'image IM2 (étape 38). A l'étape 39, le jeu d'attributs JA1 (par exemple contraste originaux conservé) est appliqué à l'image courante IM1, tandis que le jeu d'attributs JA2 (par exemple contour de l'image en traits pointillés) est appliqué à l'image modèle IM2 (étape 39).

Ainsi, dans une réalisation avantageuse, le serveur transmet au terminal, sur demande de l'utilisateur, l'application logicielle qui est mise en oeuvre sur le terminal pour commander l'interface graphique dans le but d'afficher une superposition de l'image modèle et de l'image courante. Optionnellement, l'application logicielle ainsi mise en ouvre modifie les attributs respectifs associés à l'image courante, d'une part, et à l'image modèle, d'autre part. De façon particulièrement avantageuse, on adapte une prise de vue de l'image modèle IM2 à une prise de vue de l'image courante IM1. Ainsi, la mise en oeuvre de cette application logicielle peut permettre à l'utilisateur d'ajuster les positions relatives de l'image courante et de l'image modèle, par exemple à partir d'un organe de commande tel qu'une touche de navigation du terminal. Dans une variante, un logiciel de reconnaissance de forme est mis en ouvre pour ajuster les positions relatives de l'image courante et de l'image modèle, sur l'écran d'affichage, en vue de leur superposition, comme on le verra ci-après.

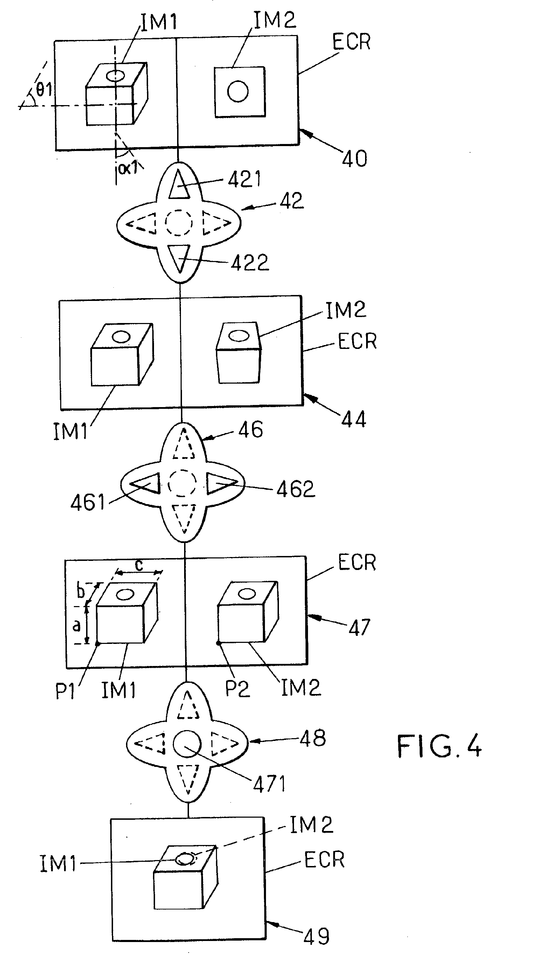

On se réfère maintenant à la figure 4 pour décrire une réalisation avantageuse de la présente invention, dans laquelle l'angle de vue de l'image modèle, téléchargée, peut être ajusté pour correspondre sensiblement avec un angle de prise de vue de l'image courante, acquise. Avantageusement, les données d'image, téléchargée, de l'image modèle IM2, sont des données d'image tridimensionnelle, ce qui permet, par une application logicielle, par exemple un moteur tridimensionnel de type *VIRTOOLS* ® ou *AUTOCAD ® ,* de faire *"tourner"* l'image modèle IM2 par rapport à un centre de symétrie de l'objet qu'elle représente. Avantageusement, un moteur tridimensionnel tel que *VIRTOOLS ®* permet en outre de modifier la taille d'un objet dans une image (fonctions "zoom" et "dé-zoom"). Dans l'exemple de la figure 4, cette application logicielle est téléchargée à partir du serveur, sur demande de l'utilisateur, dans une mémoire du terminal. En variante, cette application logicielle est mémorisée de façon permanente dans une mémoire du terminal, en vue de sa mise en ouvre, le cas échéant, pour d'autres applications. Toutefois, on prévoit préférentiellement que le terminal de l'utilisateur ne possède initialement aucune application logicielle du type ci-avant installée en mémoire.

Initialement (à l'étape 40), l'écran du terminal ECR est, par exemple, partitionné pour représenter dans une première fenêtre l'image courante IM1 et dans une seconde fenêtre, distincte, l'image modèle IM2. Dans l'exemple représenté, l'image courante IM1 est une vue en perspective d'une pièce usinée, tandis que l'image modèle IM2 est une vue de dessus d'une pièce usinée homologue. Dans une réalisation avantageuse, le terminal est équipé d'une ou plusieurs touches de navigation et l'utilisateur peut actionner ces touches de navigation pour modifier l'angle de vue de l'image modèle IM2, comme décrit ci-après.

En actionnant des boutons *"flèche haut"* 421 et *"flèche bas"* 422 (étape 42), l'utilisateur règle un angle de vue θ1 de l'image modèle IM2 par rapport à un axe horizontal passant par un centre de symétrie de la pièce usinée. L'image modèle IM2 qui en résulte, à l'étape 44, a donc subi une rotation d'angle θ1 par rapport à une ligne horizontale de symétrie de l'objet.

L'utilisateur actionne ensuite des boutons de navigation *"flèche gauche"* 461 et *"flèche droite"* 462 (étape 46), pour ajuster l'angle de vue α1 de l'image modèle IM2 par rapport à un axe vertical passant par un centre de symétrie de la pièce usinée.

A l'étape 47, l'image modèle IM2 présente sensiblement le même angle de perspective que l'image courante IM1.

A l'étape suivante 48, l'utilisateur du terminal peut actionner une touche centrale de navigation 471 pour valider la superposition des images courante IM1 et modèle IM2.

A l'étape 49, on obtient ainsi les deux images superposées sur l'écran d'affichage ECR.

Néanmoins, la superposition des deux images ne peut être effective, en pratique, que si les dimensions des objets dans les images qui les représentent (cotes a, b et c de l'image courante IM1 à l'étape 47) correspondent sensiblement d'une image IM1 à l'autre IM2. Avantageusement, dans ce mode de réalisation, une application logicielle stockée en mémoire du terminal peut être mise en ouvre par l'utilisateur pour ajuster l'échelle de l'image modèle IM2, sur l'écran ECR du terminal. Ainsi, lorsque les deux images IM1 et IM2 sont superposées sur l'écran ECR, à l'étape 49, l'utilisateur peut actionner un bouton de navigation du terminal (non représenté) pour faire correspondre, par exemple, la hauteur a de la pièce usinée dans l'image modèle IM2 avec la hauteur a de la pièce usinée dans l'image courante IM1. L'application logicielle d'ajustement d'échelle d'un objet dans une image peut être une application conventionnelle de type *"zoom*/*dé-zoom"* présente dans de nombreux éditeurs graphiques tels que l'éditeur *VIRTOOLS* précité. Cette application logicielle peut être téléchargée du serveur, sur demande de l'utilisateur, et mémorisée dans une mémoire du terminal pour être mise en oeuvre au niveau du terminal. En variante, il peut être prévu que cette application logicielle soit résidente en mémoire du terminal, le cas échéant pour servir à d'autres applications.

L'ajustement des positions relatives des images IM1 et IM2 superposées peut être effectué ensuite par l'utilisateur en actionnant des touches de navigation du terminal, en mettant en ouvre une application logicielle qui sera décrite ci-après.

Néanmoins, les capacités des terminaux, en terme de mémoire, de processeur ou autre, sont différentes d'un terminal à l'autre, et peuvent être limitées pour un certain type de terminal. C'est ainsi que, dans une variante du mode de réalisation représenté sur la figure 4, on prévoit de mettre en oeuvre les applications logicielles de sélection d'angle de vue de l'image modèle IM2 et/ou d'ajustement de l'échelle d'un objet dans l'image modèle IM2, au niveau du serveur.

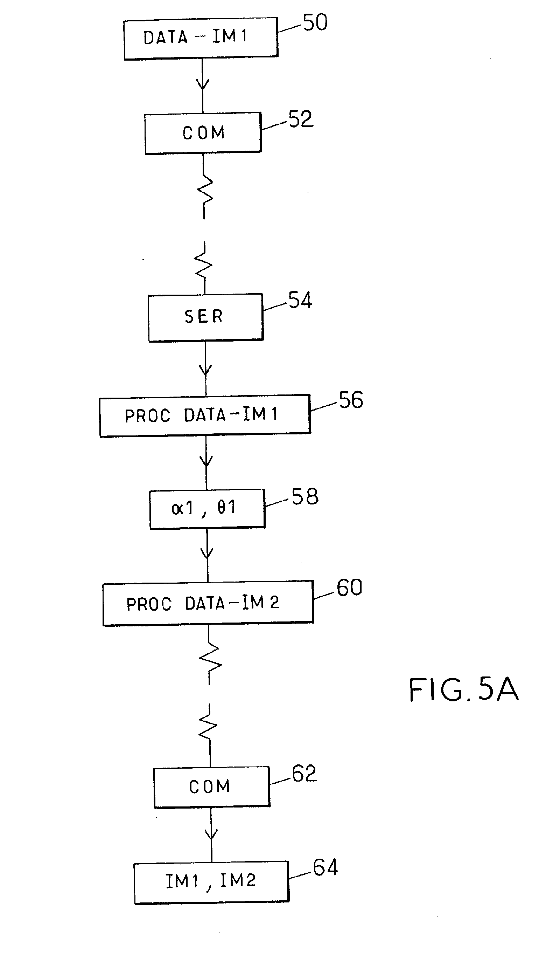

En se référant à la figure 5A, les données de l'image courante DATA_IM1 sont d'abord acquises par l'utilisateur (étape 50). L'interface de communication 14 du terminal met en forme un signal radiofréquence (étape 52) comprenant les données d'image DATA_IM1, ce signal étant reçu ensuite par le serveur (étape 54), lequel interprète les données d'image courante DATA_IM1 (étape 56) pour en déduire les angles de prise de vue α1 et θ1 (étape 58). Dans une réalisation préférée, le serveur met en oeuvre une application logicielle de reconnaissance de forme de l'objet représenté dans l'image courante. Cette reconnaissance de forme utilise un repérage des contours de l'objet, par squelettisation. A l'étape 60, le traitement se poursuit par une rotation d'angles α1 et θ1 de l'objet dans l'image modèle IM2 (rotations du type décrit ci-avant). Les données de l'image modèle IM2, avec les rotations α1 et θ1 sont retournées au terminal (étape 62), pour un affichage d'une superposition des images IM1 et IM2 sur l'écran du terminal ECR (étape 64).

Bien entendu, il peut être prévu, dans cette réalisation, d'ajuster, au niveau du serveur, aussi la taille de l'objet dans l'image modèle IM2, pour la faire correspondre avec la taille de l'objet dans l'image courante IM1, en mettant en ouvre un même logiciel de reconnaissance de forme.

Avantageusement, une telle réalisation permet d'automatiser la superposition des images courante et modèle, sans intervention directe de l'utilisateur.

On a vu, en se référant à la figure 5A, que le traitement effectué au niveau du serveur pour ajuster l'angle de vue pour la représentation de l'objet de l'image modèle IM2, peut faire intervenir les angles de prise de vue α1 et θ1 de l'image acquise, courante, ainsi que la taille de l'objet dans l'image courante (cotes a, b et c dans l'exemple représenté sur la figure 4) . Cependant, le traitement, au niveau du serveur, peut permettre en outre, par reconnaissance de forme, d'ajuster les positions relatives de l'image courante IM1 et de l'image modèle IM2, pour superposer parfaitement les deux images sur l'écran du terminal ECR.

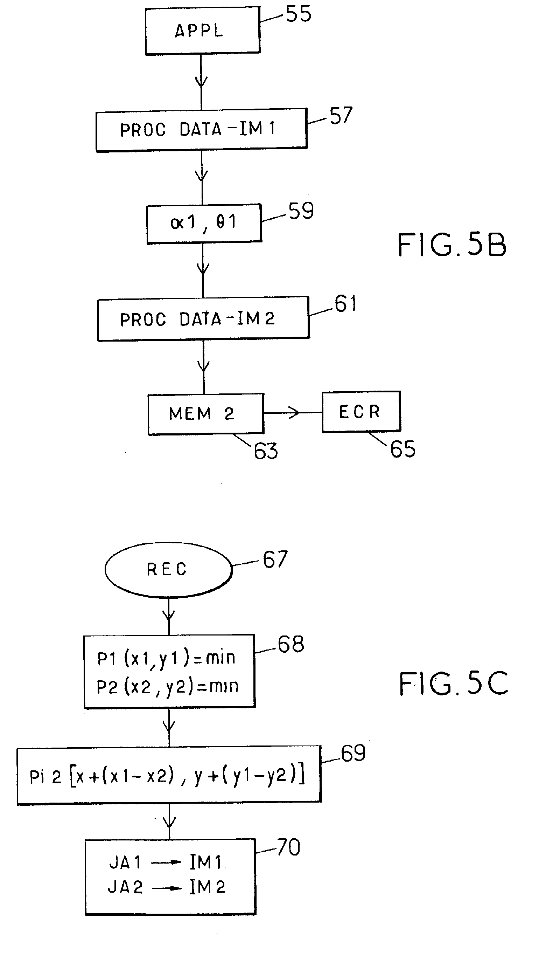

On se réfère maintenant à la figure 5B pour décrire une seconde variante du mode de réalisation de la figure 4, selon lequel les deux images courante et modèle sont superposées. Dans cette variante, plus sophistiquée, on suppose que les terminaux sont de capacité suffisante pour mettre en ouvre, au niveau du terminal, les applications logicielles permettant de :
- reconnaître la forme d'un objet dans l'image courante ;
- détecter des angles de prise de vue dans l'image courante ;
- modifier l'angle de vue de l'image modèle de sorte qu'il corresponde sensiblement à l'angle de prise de vue de l'image acquise ;
- le cas échéant, ajuster la taille de l'objet dans l'image modèle de sorte qu'il corresponde sensiblement à la taille de l'objet de l'image courante ; et
- ajuster sensiblement les positions respectives de l'image courante et de l'image modèle pour qu'elles apparaissent superposées sur l'écran d'affichage ECR.

Le traitement de la figure 5B commence par la réception (à l'étape 55) des applications logicielles nécessaires, sur demande de l'utilisateur. Ces applications logicielles sont mises en oeuvre (à l'étape 57) pour déterminer, dans l'image courante IM1, les angles de prise de vue α1 et θ1 (étape 59), ainsi que, le cas échéant, la taille de l'objet dans l'image IM1. Parallèlement ou antérieurement, les données de l'image modèle IM2 ont été acquises et mémorisées dans la partie MEM2 de la mémoire vive 12. A l'étape 51, les données d'image modèle qui correspondent aux angles de vue α1 et θ1 sont sélectionnées dans la partie MEM2 de la mémoire vive 12 (étape 63), en vue d'un affichage de l'image modèle IM2 sur l'écran ECR (étape 65).

Avantageusement, le traitement peut se poursuivre par l'ajustement des positions respectives des objets représentés par les images IM1 et IM2. En se référant à la figure 5C, la mise en oeuvre de l'application logicielle de reconnaissance de forme à l'étape 67 mène à la détermination d'un pixel P1 dans l'image courante IM1, faisant partie d'un contour de l'objet courant dans l'image IM1 et dont les coordonnées x1 et y1 sont minimum (pixel P1 en bas à gauche dans le contour représentant l'objet de IM1, tel que représenté à l'étape 47 de la figure 4). De la même manière, l'application logicielle de reconnaissance de forme est aussi mise en oeuvre pour repérer un contour dans l'image modèle et en déduire les coordonnées x2 et y2 du pixel P2 dans le contour de l'objet de l'image modèle et dont les coordonnées sont les plus petites (pixel P2 en bas et à gauche de l'image IM2, tel que représenté sur la figure 4). A l'étape suivante 69, on cherche à superposer les pixels P1 et P2, sur l'écran ECR. Pour cela, on applique une translation, vectorielle à tous les pixels Pi de l'image modèle IM2, le vecteur de translation ayant les coordonnées ((x1-x2) , (y1-y2)). Le traitement se poursuit, le cas échéant, par une application de jeux d'attributs respectifs JA1 et JA2 aux images courante IM1 et modèle IM2 (étape 70 de la figure 5c).

L'application logicielle de reconnaissance de forme mise en ouvre à l'étape 67 peut être une application conventionnelle, avec recherche de pixels connexes de même niveau de gris ou de différence de niveau de gris inférieure à un seuil prédéterminé.

Parmi des logiciels connus mettant en ouvre une reconnaissance de forme, on peut citer à titre d'exemples non limitatifs *PHOTOSHOP* ® , *FIREWORKS ® , PAINTSHOP PRO ® .*

Avantageusement, on prévoit une application logicielle supplémentaire pour compter, d'une part, le nombre de pixels qui sont à l'intersection des contours respectifs des objets dans l'image courante et dans l'image modèle et, d'autre part, le nombre de pixels qui sont compris dans un contour d'un objet de l'une des deux images et exclus du contour d'un objet de l'autre image. Le traitement se poursuit par un rapport de ces deux nombres de pixels pour en déduire une note (sur 20) qui serait attribuée à l'utilisateur pour le geste sportif, en comparaison avec le geste professionnel de la base de données 30, ou encore pour la pièce usinée par l'utilisateur, par comparaison avec la pièce usinée référencée dans la base de données 30. Ainsi, en se référant à la figure 3A, l'écart entre les deux contours d'image IM1 et IM2 est mesuré et une note est attribuée pour le saut en hauteur, en fonction des écarts entre les contours d'image. De même, en se référant à la figure 3B, le nombre de pixels compris dans les croissants délimités par les contours respectifs des alésages dans l'image courante IM1 et dans l'image modèle IM2 est représentatif d'un écart entre l'objet de l'image courante et l'objet de l'image modèle : une note est attribuée à l'utilisateur en fonction de ce nombre de pixels.

Dans une réalisation particulièrement avantageuse, l'utilisateur du terminal acquiert une séquence animée courante, par exemple à partir d'une caméra vidéo-numérique à capteurs CCD, intégrée au terminal. Sur demande de l'utilisateur, on transmet, du serveur au terminal, une succession d'images modèles sous la forme d'une séquence animée modèle, en vue d'un affichage simultané, pour comparaison, de la séquence modèle et de la séquence courante. Cette réalisation s'adapte avantageusement à la comparaison de gestes exécutés (par exemple un geste sportif).

Les données d'image des séquences animées courante et/ou modèle sont préférentiellement au format MPEG, ce format offrant la possibilité d'incruster en temps réel une première séquence vidéo dans une seconde séquence vidéo, ce qui permet d'afficher simultanément les deux séquences, côte à côte, ou encore superposées. Pour de telles applications, il peut être aussi prévu un format de type ASF (pour *Advanced Streaming Format)* ou encore un format de type WMV (pour *Windows* Media *Vidéo),* ou encore un format de données d'image reconnu par l'application QUICK TIME® .

Avantageusement, il est prévu une synchronisation entre la séquence animée courante et la séquence animée modèle. Dans cette réalisation, le menu auquel a accès l'utilisateur propose de repérer un instant de début de séquence t0 et un instant de fin de séquence t1. Dans le cas d'un saut en hauteur, l'instant t0 peut correspondre au moment où le sauteur touche le sol avec son pied d'appui avant d'effectuer le saut. L'instant t1 peut correspondre au moment où les épaules du sauteur touchent le tapis de sol, à la réception. L'utilisateur du terminal actionne, par exemple, une première touche du terminal lorsqu'il voit le pied d'appui du sauteur toucher le sol et peut, par exemple, actionner une seconde fois cette même touche, lorsqu'il voit les épaules du sauteur toucher le tapis de sol. Au préalable, une application logicielle est téléchargée dans la mémoire du terminal pour compter le temps écoulé entre les deux actionnements de cette touche du terminal. La mise en oeuvre de l'application logicielle, à partir de l'écart temporel entre t1 et t0, permet de déterminer le nombre d'images par seconde à faire défiler dans la séquence animée modèle, entre les deux instants t0 et t1.

Le traitement peut se poursuivre par une reconnaissance de l'objet dans l'image courante de l'instant t0, avec une détermination des angles de prise de vue α1 et θ1, ainsi qu'une détermination des dimensions de l'objet dans l'image et, le cas échéant, une détermination du pixel dans le contour de l'objet dont les coordonnées sont les plus petites. La première image fixe de la séquence animée modèle, correspondant à l'instant t0, ainsi que les images fixes aux instants suivants sont sélectionnées avec des angles de vue correspondant sensiblement aux angles α1 et θ1, et les tailles des objets qu'elles représentent sont ajustées, comme décrit précédemment. Avec la superposition des pixels de plus petites coordonnées, on obtient une superposition des deux séquences animées courante et modèle. Bien entendu, compte tenu des temps de traitement nécessaires pour une séquence animée et des capacités des terminaux actuels, il convient de transmettre, du terminal au serveur, la séquence animée courante, pour un traitement au niveau du serveur, du type décrit en référence à la figure 5A.

Bien entendu, la présente invention ne se limite pas à la forme de réalisation décrite ci-avant à titre d'exemple. Elle s'étend à d'autres variantes.

Ainsi, on comprendra que les applications logicielles de reconnaissance de forme, d'ajustement d'angles de vue, de taille d'objets dans les images, de position de pixels de plus petites coordonnées dans le contour d'un objet, ou autre, peuvent être téléchargées du serveur au terminal, suivant les capacités du terminal. Cependant, pour les terminaux de faible capacité, il est plutôt prévu une transmission des données d'image acquises du terminal au serveur, pour traiter les images plutôt au niveau du serveur.

Le cas échéant, dans le procédé précédemment décrit en rapport avec la figure 2, il peut être prévu, avec l'identifiant d'abonné ID_AB, un identifiant de capacité mémoire du terminal de l'utilisateur abonné pour que le serveur accède aux données relatives aux capacités du terminal (taille de la mémoire vive, vitesse du processeur). Si les capacités du terminal sont inférieures à un seuil prédéterminé, par exemple, le serveur envoie au terminal un message de requête des données d'image acquises. En retour, le terminal transmet au serveur les données d'image acquises pour que les traitements d'image soient effectués au niveau du serveur. En revanche, si les capacités du terminal sont supérieures à un seuil prédéterminé, le serveur envoie au terminal les applications logicielles nécessaires pour traiter les images courante et/ou modèle, au niveau du terminal. Bien entendu, il peut aussi être pris en compte les durées de transmission. Ainsi, même si les capacités du terminal permettent un traitement au niveau du terminal, il est prévu préférentiellement de transmettre les données d'image acquise du terminal vers le serveur, pour un traitement au niveau du serveur, si la transmission de ces données d'image est plus courte que la transmission des applications logicielles et leur mise en oeuvre au niveau du terminal.

Bien entendu, les objets représentés peuvent être différents d'un saut en hauteur ou d'une pièce usinée. Ainsi, on comprendra que les images courante et modèle peuvent représenter des métiers artisanaux (pose de carrelage, jardinage, bricolage ou autre), des gestes de métiers mécaniques (changement d'une pièce de moteur, ou autre), des gestes de secourisme, ou encore des gestes sportifs différents de ceux décrits ci-avant (swing de golf).

## Revendications

1. Procédé de transmission de données d'images entre un serveur et un terminal, le terminal (1) comprenant un écran d'affichage (ECR) commandé par une interface graphique (13) et une mémoire (12) dans laquelle sont mémorisées des données acquises d'au moins une image courante (IM1), ladite mémoire étant apte à coopérer avec l'interface graphique en vue d'un affichage de l'image courante sur l'écran du terminal,
dans lequel on transmet du serveur (SER) au terminal (1), sur demande d'un utilisateur du terminal :
- des données d'au moins une image modèle (IM2),
- ainsi qu'une application logicielle (APPL) de contrôle de ladite mémoire (12), pour réserver :
• une première partie (MEM1) de la mémoire aux données d'image courante acquises, et
• une seconde partie (MEM2) de la mémoire aux données d'image modèle transmises,
en vue d'un affichage simultané de l'image courante (IM1) et de l'image modèle (IM2) sur l'écran du terminal (ECR).

2. Procédé selon la revendication 1, dans lequel, l'image courante représentant un premier objet, on transmet, sur demande d'un utilisateur du terminal, les données d'image modèle d'un second objet choisi, homologue du premier objet, en vue de comparer les images respectives du premier et du second objet sur l'écran du terminal.

3. Procédé selon l'une des revendications 1 et 2, dans lequel ledit terminal comporte des moyens de prise de vue (OBJ) pour acquérir lesdites données d'image courante.

4. Procédé selon l'une des revendications précédentes, dans lequel lesdites données d'image modèle (IM2) sont des données d'image tridimensionnelle,
ce qui permet d'afficher, sur l'écran du terminal, l'image modèle suivant un angle de vue correspondant sensiblement à un angle de prise de vue pour acquérir lesdites données d'image courante.

5. Procédé selon la revendication 4, dans lequel on transmet, du serveur au terminal, une application logicielle (VIRTOOLS) destinée à être mise en oeuvre sur le terminal pour sélectionner au moins un angle de vue (α1, θ1) de l'image modèle, par commande de l'utilisateur du terminal.

6. Procédé selon la revendication 4, prise en combinaison avec la revendication 2, dans lequel :
- on transmet, du terminal au serveur, lesdites données d'image acquises,
- on applique, au niveau du serveur, une reconnaissance de forme du premier objet dans l'image courante pour déterminer au moins un angle de prise de vue de l'image courante (α1, θ1),
- on sélectionne, au niveau du serveur, au moins un angle de vue de l'image modèle correspondant sensiblement à l'angle de prise de vue de l'image courante, et
- on transmet, du serveur au terminal, des données d'image modèle (IM2) suivant cet angle de vue.

7. Procédé selon la revendication 4, prise en combinaison avec la revendication 2, dans lequel on transmet du serveur au terminal :
- une application logicielle de reconnaissance de forme du premier objet dans l'image courante, et
- une application logicielle de sélection d'au moins un angle de vue (α1,θ1) de l'image modèle correspondant sensiblement à l'angle de prise de vue de l'image courante.

8. Procédé selon l'une des revendications précédentes, prises en combinaison avec la revendication 2, dans lequel on transmet, du serveur au terminal, une application logicielle destinée à être mise en ouvre sur le terminal pour ajuster la taille du second objet dans l'image modèle (IM2), par commande de l'utilisateur du terminal.

9. Procédé selon l'une des revendications 1 à 7, prises en combinaison avec la revendication 2, dans lequel on transmet du serveur au terminal :
- une application logicielle de reconnaissance de forme du premier objet dans l'image courante, et
- une application logicielle de mise à l'échelle du second objet dans l'image modèle, en fonction d'une taille déterminée (a,b,c) du premier objet dans l'image courante.

10. Procédé selon l'une des revendications 5, 6 et 7, prises en combinaison avec l'une des revendications 8 et 9, dans lequel on transmet, du serveur au terminal, une application logicielle destinée à être mise en oeuvre sur le terminal pour contrôler l'interface graphique en vue d'afficher une superposition de l'image modèle et de l'image courante.

11. Procédé selon la revendication 10, dans lequel on transmet, du serveur au terminal, une application logicielle de reconnaissance de forme, destinée à être mise en oeuvre sur le terminal pour mesurer des écarts de forme entre le premier objet et le second objet.

12. Procédé selon l'une des revendications 6, 7, 9 et 11, dans lequel ladite reconnaissance de forme met en oeuvre un repérage des contours d'objet dans une image courante et/ou dans une image modèle, par squelettisation.

13. Procédé selon l'une des revendications précédentes, dans lequel on transmet, du serveur au terminal, une pluralité d'images modèles successives sous forme d'une séquence animée modèle, en vue d'un affichage simultané, pour comparaison, de ladite séquence modèle et d'une séquence animée courante, acquise.

14. Procédé selon la revendication 13, dans lequel on transmet, du serveur au terminal, une application logicielle destinée à être mise en oeuvre sur le terminal pour synchroniser les affichages respectifs de la séquence acquise et de la séquence modèle.

15. Procédé selon l'une des revendications précédentes, dans lequel on établit une communication entre le terminal et le serveur pour choisir au moins une image modèle dont les données sont à télécharger, parmi une banque de données d'images modèles d'objets distincts (30).
